# EUROPEAN PATENT APPLICATION

(11) **EP 1 763 225 A2**
(43) Date of publication of application: **14.03.2007**
(21) Application number: 06120280.0
(22) Date of filing: 07.09.2006
(51) Int. Cl.: H04N 5/232

(54) **Lens apparatus**

(30) Priority: 13.09.2005 JP 2005264621
(71) Applicant: Canon Kabushiki Kaisha, Ohta-Ku, Tokyo 146-8501 (JP)
(72) Inventor: Natsume, Satoshi, Tokyo Tokyo 146-8501 (JP); Sakamoto, Masayuki, Tokyo Tokyo 146-8501 (JP)
(74) Representative: TBK-Patent

(57) **Abstract**

A lens apparatus comprising an image pickup optical system having a focus lens, a focus state detection unit which detects focus state of the image pickup optical system, a distance detection unit which determines the distance to the subject, an actuator which drives the focus lens, a controller which controls the operation of the actuator according to the output from the focus state detection unit and a distance range setting unit which sets a distance range in focus operation for the focus lens, wherein the controller compares distance information from the distance detection unit and distance range set by the distance range setting unit to control the operation of the actuator which drives the focus lens based on the comparison results.

## Description

### BACKGROUND OF THE INVENTION

### Field of the Invention

The present invention relates to a lens apparatus capable of shooting moving images used for television lenses and video lenses.

### Description of the Related Art

The primary autofocus control (AF) method used for a video camera in recent years is a TV-AF method. The TV-AF method performs control in such a manner that the sharpness of an image out of video signals obtained by photoelectrically converting a subject image by an image pickup device is detected and taken as an AF evaluation value and searches the position of a focus lens which will be the maximum of the AF evaluation value.

In general, high frequency components extracted from video signals by a band pass filter with a given band are used as the AF evaluation value of the TV-AF method. When a typical subject image is taken, the AF evaluation value becomes greater according as a focusing point is reached and becomes maximum at a focus position.

Other AF methods include an internal-photometric phase difference detection method (Through-the-Lens (TTL)). In the internal-photometric phase difference detection method, a light beam passing through an exit pupil of a shooting lens is divided into two parts and received by a pair of line sensors respectively. The shift quantity of the signal outputted according to the received light quantity, in other words, the shift quantity of relative position in the direction to which the light beam is divided is detected to directly determine the defocus quantity of a shooting lens. For this reason, once a storing operation is performed with a focus detecting sensor, a quantity and direction required for driving the focus lens is obtained, enabling a high speed focus adjustment operation.

Among the similar phase difference detection methods, there is an external-photometry phase difference detection method which does not use light passed through a shooting lens. In the external-phase difference detection method, a light beam from a subject is divided into two parts and received by a pair of line sensors respectively. The shift quantity of the signal outputted according to the received light quantity, in other words, the shift quantity of relative position in the direction to which the light beam is divided is detected to determine distance to the subject by triangulation.

Other AF methods using an external photometry sensor include a method of measuring distance to a subject by propagation velocity of a supersonic wave using a supersonic wave sensor and a triangulation method using an infrared sensor. Furthermore, there is a hybrid AF method which combines these AF methods with each other. In the hybrid AF method, for example, as disclosed in Japanese Patent Application Laid-Open No. H05-64056, a focus lens is driven near to its focal point with an internal-photometric phase difference detection method, thereafter, the focus lens is more precisely driven to a focus position with the TV-AF method.

In a lens system for a television camera and others represented by a broadcasting lens, hitherto, a camera operator has manually focused, recently however, an AF lens adjustment method of automatically performing focus adjustment is proposed, for instance, in Japanese Patent Application Laid-Open No. H01-158881.

When such an AF system detects that a camera operator has finished focus operation or has pressed an AF switch, the system performs an AF operation referred to as "one shot AF" in which a focus operation is performed only once after that. In this case, it is prerequisite to reach focus to such an extent that a camera operator can check it with a viewfinder, so that the quantity of change in position of the focus lens, in other words, the quantity of movement of the focus lens at the time of adjusting focus with AF is limited to a very small range.

A lens system with autofocus function is provided with so-called "full-time AF" capable of shooting with AF always ready, as well as the above one shot AF. Shooting using such a lens system may cause malfunction depending upon shooting conditions. For example, the malfunction is caused when no subject exists in a picture screen after a camera operator has manually focused and thereafter operated AF. In this case, locating focus position within the drive range of a focus lens may cause terribly blurred focus. Even when a camera pans between two subjects, nothing exists between the subjects causes a problem with being badly out of focus.

A proposal has been put forth to set the range of focus operation in AF, capable of switching the range of AF operation into two ranges: one range between very near distance and infinite distance and the other range of several-meter distance to infinite distance. However, when images are taken indoors such as in a hall, distance to a subject is usually 10 meters to 15 meters. In a football stadium outside, images are taken in the range of 50 meters to 100 meters, which is a limited distance to a subject. For this reason, the above two-range focus setting is not always sufficient and substantially the same as that used in an AF function-mounted lens system without function to switch the range of a focus operation.

### SUMMARY OF THE INVENTION

One of exemplary objects in the present invention is to provide a lens apparatus capable of reducing malfunction and time required for focusing even if a subject is out of sight from a picture screen.

According to one aspect of the present invention, a lens apparatus comprises an image pickup optical system having a focus lens, the image pickup optical system which picks up a subject image; a focus state detection unit which detects a focus state of the image pickup optical system; a distance detection unit which determines distance to the subject on the basis of the output from the focus state detection unit and optical information from the image pickup optical system; an actuator which drives the focus lens; a controller which controls an operation of the actuator according to the output from the focus state detection unit; and a distance range setting unit which sets a distance range in focus operation for the focus lens, wherein the controller compares distance information from the distance detection unit and the distance range set by the distance range setting unit to control the operation of the actuator which drives the focus lens based on the comparison results. The advantage of the present invention will become apparent by referring to the following detailed description of embodiments and appended drawings.

Further features of the present invention will become apparent from the following description of exemplary embodiments (with reference to the attached drawings).

### BRIEF DESCRIPTION OF THE DRAWINGS

FIG. 1 shows a circuit block diagram of a first embodiment.

FIG. 2 shows a flow chart for setting operation.

FIG. 3 is a drawing for describing a cross key for setting.

FIGS. 4A, 4B, 4C and 4D show display screens.

FIG. 5 shows an operational flow chart in the first embodiment.

FIG. 6 shows a display screen.

FIG. 7 shows a setting dial.

FIG. 8 shows a circuit block diagram of a second embodiment.

FIG. 9 shows an operational flow chart.

FIG. 10 shows a circuit block diagram of a third embodiment.

FIG. 11 shows a flow chart for setting operation.

FIGS. 12A, 12B and 12C show display screens.

FIG. 13 shows an operational flow chart for the third embodiment.

FIG. 14 shows a circuit block diagram of a fourth embodiment.

FIG. 15 is comprised of FIGS. 15A and 15B showing operational flow charts.

### DESCRIPTION OF THE EMBODIMENTS

The embodiment of the present invention is described below with reference to the drawings.

(First embodiment)

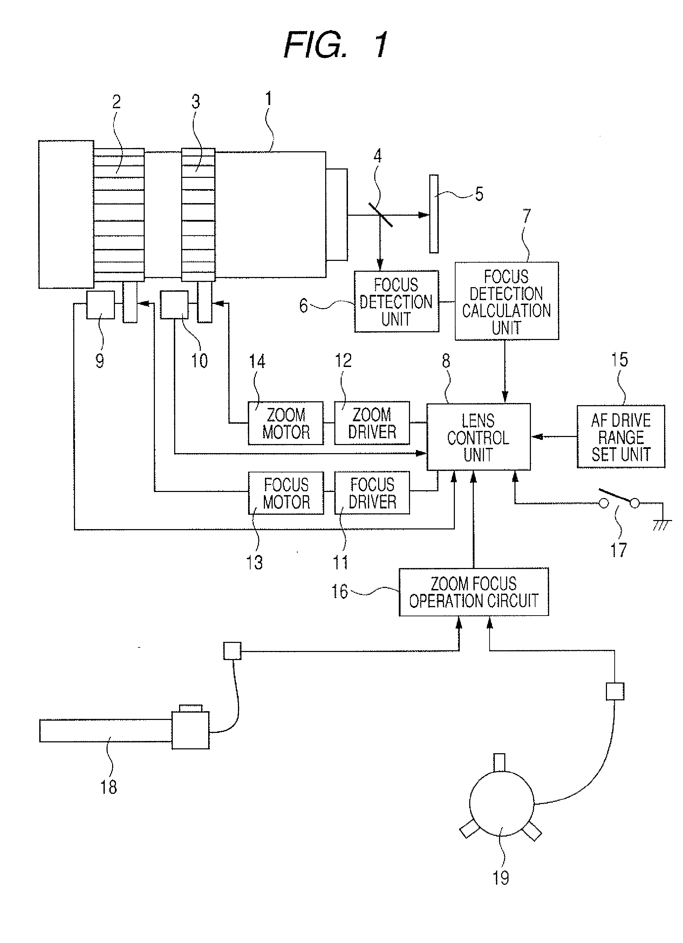

FIG. 1 is a circuit block diagram of a lens system equipped with a focus detecting device in the first embodiment. In FIG. 1, a zoom lens 1 uses a front lens focus system and contains a focus adjusting lens, zoom lens and iris adjusting unit.

A focus lens unit with a focus ring 2 and a zoom lens unit with a zoom ring 3 are arranged inside the zoom lens 1. A half mirror 4 and CCD 5 which picks up images are arranged at the back of zoom lens 1. A light beam incident on the half mirror 4 through the zoom lens 1 is divided into two parts. The light beam passing through the half mirror 4 is incident on the CCD 5. The light beam reflected on the half mirror 4 is adapted to be incident on a focus detection unit 6 arranged conjugately with the CCD 5 relative to the half mirror 4. The focus detection unit 6 has an AF sensor composed of a plurality of line-sensor array pairs and the output thereof is connected to a lens control unit 8 through a focus detection calculation unit 7. The output of a focus position detection unit 9 which detects the position of the focus ring 2 and of a zoom position detection unit 10 which detects the position of the zoom ring 3 is connected to the lens control unit 8.

On the other hand, the output of the lens control unit 8 is connected to a focus driver 11 and a zoom driver 12, drives the focus ring 2 through a focus motor 13 and rotates the zoom ring 3 through a zoom motor 14. Furthermore, the lens control unit 8 is connected to the output of an AF drive range set unit 15, zoom focus operation circuit 16 and AF switch 17 which turns AF on and off. The outputs of a zoom operation member 18 and focus operation member 19 are connected to the zoom focus operation circuit 16.

In the AF operation of the system, light from a subject reflected on the half mirror 4 is incident on the AF sensor consisting of a plurality of line-sensor array pairs in the focus detection unit 6. When the focus of the shooting lens is ahead of plane of the CCD 5, subject images formed on the sensor array pairs are close to each other. When the focus of the shooting lens is behind the plane of the CCD 5, subject images are away from each other. That is to say, the output from the AF sensor is different in distance to the subject image depending on focus state, front-focused state or back-focused state. The movement quantity of the focusing lens is determined so that the distance is equal to that in focus state to move the focusing lens.

Since the relative position displacement of a subject image outputted from the AF sensor has a specific functional relationship with the out-of-focus quantity of the shooting lens, the out-of-focus quantity is determined by calculation at the focus detection calculation unit 7 using the output of each sensor array pair. Since a relationship between the out-of-focus quantity and defocus quantity being image-plane displacement is determined depending on the optical system for taking images, the defocus quantity is found from the table data stored in the memory of the control unit 8. The focus detection calculation unit 7 sends the determined defocus quantity to the lens control unit 8. The lens control unit 8 calculates the drive quantity for the focus lens unit required for AF operation from the defocus quantity and outputs it to the focus driver 11. While a typical lens system takes the range between very near distance and infinite distance as a focusable AF drive range, the first embodiment sets and limits the AF drive range by the AF drive range set unit 15.

The lens control unit 8 outputs a driving signal according to the operation quantity of the zoom operation member 18 and focus operation member 19 through the zoom focus operation circuit 16 to drive and operate the focus ring 2 and the zoom ring 3. The focus ring 2 is adapted to be rotated in conjunction with the front lens focus adjusting lens unit to move the front lens focus lens unit. The zoom ring 3 moves the zoom lens unit along a cam groove formed on the fixed lens barrel according to rotation to permit variable power.

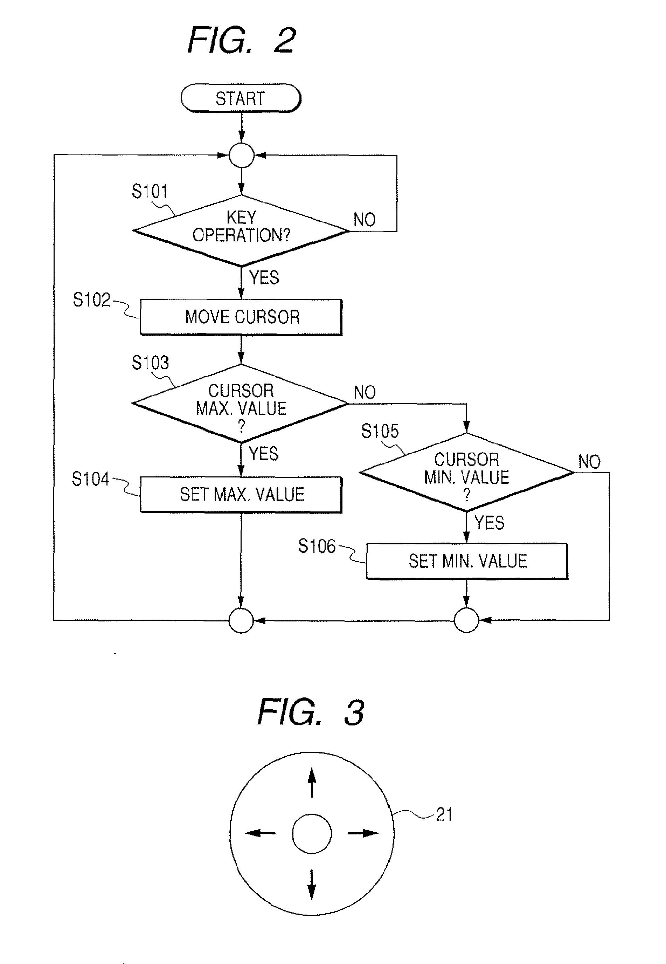

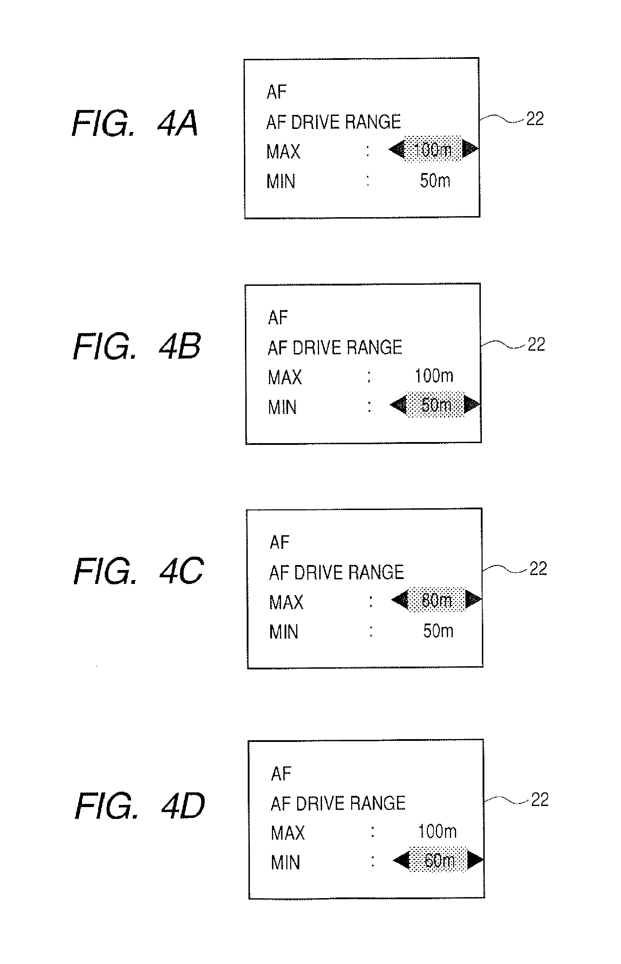

FIG. 2 is a flow chart for setting operation in the AF drive range set unit 15. The lens control unit 8 checks if a key has been operated at a step S101. If the key has not been operated, check is repeated. If the key has been operated, the process proceeds to a step S102. The key is operated by using a cross key 21 shown in FIG. 3, pressing the arrows (↑ ↓ ← →) enables a cursor on a display 22 connected to the AF drive range set unit 15 to be moved to the directions indicated by the arrows. In an example of FIG. 4A, the cursor is on a part of 100 m. Pressing the arrow ↓ of the cross key at this moment shifts to a position of 50 m shown in FIG. 4B. It is usual to use the four-direction operation key 21 shown in FIG. 3. Various keys such as two- or eight-direction key are available depending on directions to which a cursor is to be moved. Such operation keys may be used.

At a step S102, the cursor is moved by operating the key. After the cursor is moved, it is confirmed whether the cursor is in the position of MAX shown in FIG. 4A. If it is in the position of MAX, the process proceeds to a step S104, if not, the process advances to a step S105.

At a step S104, the value of MAX is set. The value of 100 m shown in FIG. 4A can be changed by pressing the arrows "←" and "→" of the cross key in the same manner as the cursor is moved. A press on a left arrow key "←" decreases a numeric value and a press on a right arrow key "→" increases a numeric value. FIG. 4C shows that a press on the left arrow key "←" decreases the value to 80 m. The value shows the upper limit of AF drive range. When setting is finished, a press on ; at the center of the cross key 21 or instruction by the cursor allows setting to be stored in a memory in the lens control unit 8. Storing may be performed in such a manner that moving the cursor to another direction enables the setting to be automatically stored.

Now back to a step S103, if the cursor is not in the position of MAX, the process proceeds to a step S105 to set the value of MIN. As shown in FIG. 4B, the MIN value of 50 m can be changed by pressing the arrow "←" or "→" of the cross key 21 in the same manner as the cursor is moved.
FIG. 4D shows that a press on the arrow key "→" changes to 60 m, which is the lower limit of the AF drive range. When setting is finished, the process returns to the step S101. For the relationship between the MAX and the MIN value, the MAX value is greater than or equal to the MIN value, or the MIN value will not exceed the MAX value.

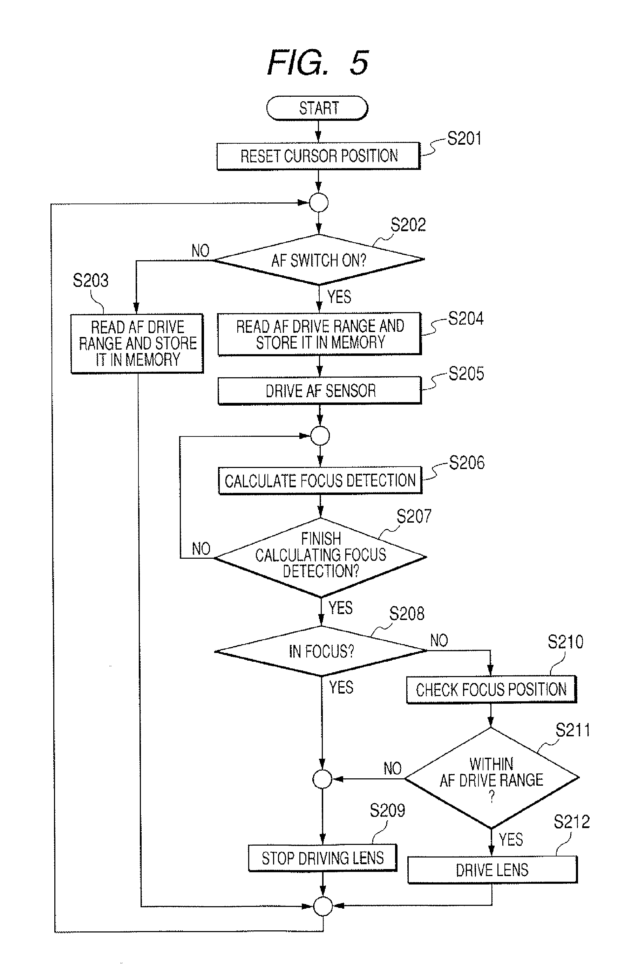

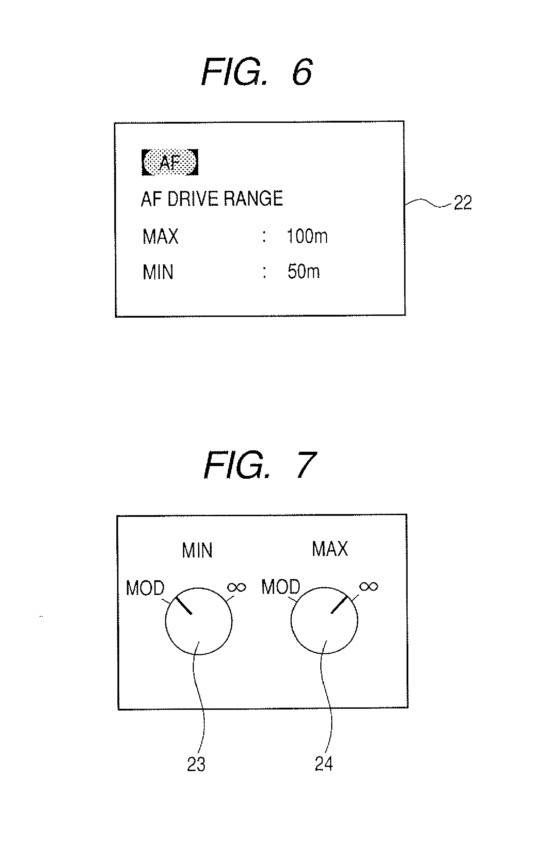

FIG. 5 is a flow chart of focus operation. Turning on the power supply of the lens system causes the process to proceed to a step S201 to reset the position of the cursor of the display 22 which displays the range of the AF drive range set unit 15. The cursor may be reset to an arbitrary position, however, it is usual to reset it to a position of AF on the top of the display 22 shown in FIG. 6.

Then, the process advances to a step S202 to check whether the AF switch 17 has been turned on. If the AF switch 17 has been turned off, the process proceeds to a step S203 to read the MAX and the MIN value in the AF drive range set by the AF drive range set unit 15 and to store them in the lens control unit 8 or in the externally connected memory. If the AF switch 17 has been turned on, the AF is in operation, the process proceeds to a step S204 to read the MAX and the MIN value in the AF drive range set by the AF drive range set unit 15 and to store them in the memory as is the case with the step S203.

Further, the process advances to a step S205, light from the subject via the half mirror 4 is incident on the AF sensor inside the focus detection unit 6. Line-sensor array pairs in the AF sensor store the received light and thereafter send the stored image signal data as relative position displacement to the focus detection calculation unit 7. Then, at a step S206, the unit 7 starts calculation of focus detection.

The focus detection calculation unit 7 determines defocus quantity from relative position displacement. Since the relative position displacement has a specific functional relationship with out-of-focus quantity of the shooting lens, the out-of-focus quantity is determined by calculation. Since a relationship between the out-of-focus quantity and defocus quantity being image-plane displacement is determined depending on the optical system to be used, the defocus quantity is found from the table data stored in the memory of the control unit 8. The current photographic magnification is obtained on the basis of lens data such as current lens extending amount and focal length with respect to the infinite position of the lens system to be used. Distance to a subject is obtained by calculation on the basis of photographic magnification and defocus quantity. Information obtained on the distance to the subject is send to the lens control unit 8. The process proceeds to a step S207. If the calculation of focus detection has not finished, the process returns to the step S206 to continue the calculation of focus detection. If the calculation has been finished, the process proceeds to a step S208.

At the step S208, the focus position detection means 9 confirms the current position of the focus lens. The lens control unit 8 determines whether the information on the distance to the subject is the same as the current focus position. If the information is the same as the current focus position, which is in focus, in other words, the process advances to a step S209 to stop driving the lens. If the information is different from the current focus position, the process advances to a step S210 and a distance to the subject in focus calculated from defocus quantity are confirmed.

At a step S211, it is confirmed whether the distance to the subject in focus falls within the AF drive range set by the AF drive range set unit 15 and stored in the memory. If it falls within the range, at a step S212, the lens control unit 8 generates a drive signal to send it to the focus driver 11 to rotate the focus ring 2 to the position corresponding to the distance to the subject to move the focus lens unit.

To take one example, if the MIN value of an AF drive range has been set to 10 m and the MAX value thereof has been set to 30 m by the AF drive range set unit 15, and if the distance to the subject in focus position is 20 m away, it is regarded as falling within the drive range to drive the focus lens unit. If the distance is 35 m away, it is regarded as falling outside the drive range not to drive the focus lens unit.

Setting the AF drive range described above prevents a subject outside the range from being focused even if the subject is out of sight from the picture screen when a subject moving very fast or pinpoint subject is shot. Therefore, setting the AF drive range also prevents terribly blurred focus and focusing a wrong subject outside the range and precludes malfunction in the autofocus operation interrupting broadcasting and increase in time required for focusing.

While the AF method in the first embodiment is described using the phase difference method, another AF method may be used in which an external photometry is used to calculate distance to a subject and to enable a range finding. Although it is described in the first embodiment that the AF drive range set unit 15 causes the display 22 to display the MAX and the MIN value and the cross key 21 operates and changes the values, dials 23 and 24 shown in FIG. 7 may be used to set the values.

When the dials 23 and 24 are used, however, the MAX and the MIN value can be reverse to each other. If the resistance set value of the MAX value is equal to or below the resistance set value of the MIN value, the MAX value stored in the memory is taken to the same value as the MIN value. If the dial indication value of the MIN value is equal to or above the dial indication value of the MAX value, the MIN value stored in the memory is taken to the same value as the MAX value. Alternatively, a dial larger in indication value may be designated as a dial for the MAX value, and a dial smaller in indication value may be designated as a dial for the MIN value without designating the dial 24 as a dial for the MAX value and the dial 23 as a dial for the MIN value.

In the first embodiment, while setting and displaying the MAX and the MIN value are performed on the display 22, they may be displayed on the viewfinder connected to the lens system to set and change the values.

(Second embodiment)

In the first embodiment is described the AF method such as a phase difference method in which a focus lens unit is driven to find distance to a subject without reaching a focused position. However, autofocus operation can be performed by detecting a focus direction by slightly moving a wobbling lens unit using a video signal and by using high frequency components extracted from the video signal, like a contrast method. In this method, extracted high frequency components are used as AF evaluation value. The value becomes greater according as a focus position is approached when an ordinary subject image is taken, and a position where the level shows maximum is a focus position.

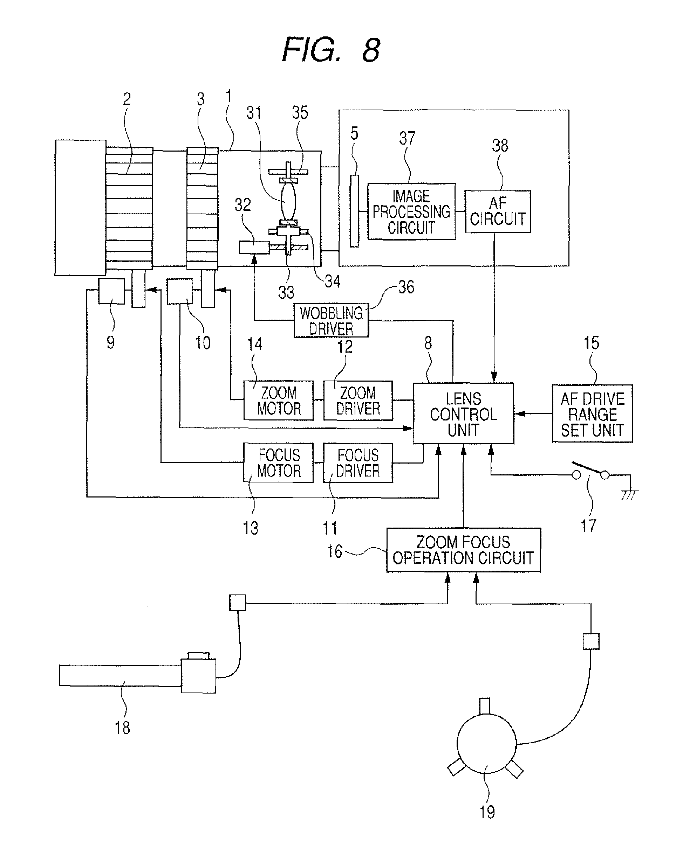

FIG. 8 is a circuit block diagram of a lens system of the second embodiment using the above method. The same reference numerals as those in the first embodiment show the same members. The half mirror 4 in the first embodiment is omitted from the figure and a wobbling lens unit 31 is arranged at the back of the zoom lens 1 instead. The wobbling lens unit 31 is driven by a wobbling motor 32 consisting of for example a step motor through a moving frame 33 and adapted to move along guide bars 34 and 35. The output of the lens control unit 8 is connected to the wobbling motor 32 through the wobbling driver 36. The output of the CCD 5 is connected to the lens control unit 8 through an image processing circuit 37 and an AF circuit 38.

In the AF method of the second embodiment, light passing through the shooting lens is imaged onto the imaging surface of the CCD 5, converted to a video signal by the CCD 5 and outputted. An image processing circuit 37 processes the video signal inputted from the CCD 5 using a filter to detect the horizontal and the vertical synchronizing signal from the video signal to form the reference signal. The AF circuit 38 calculates sharpness as AF evaluation value from the reference signal in a focus detection area set in the center of a shooting screen.

If the focus detection area has been set in the center of a shooting screen, a subject will always be in focus in the center of a shooting area. Then, the lens control unit 8 outputs a wobbling lens driving signal to the wobbling motor 32 to move the wobbling lens unit 31 forward and backward in the optical axis direction to detect a direction at which sharpness increases, thereby determining a focus direction. The lens control unit 8 calculates a target position of the focus lens unit where sharpness is maximized on the basis of sharpness calculated by the AF circuit 38 and current position and focus direction of the focus lens unit and outputs a focus control signal to the focus driver 11. The focus driver 11 rotates the focus motor 13 to detect the position of the focus lens unit by the focus position detection means 9 to drive the focus lens unit by feedback control, thereby focusing on the subject.

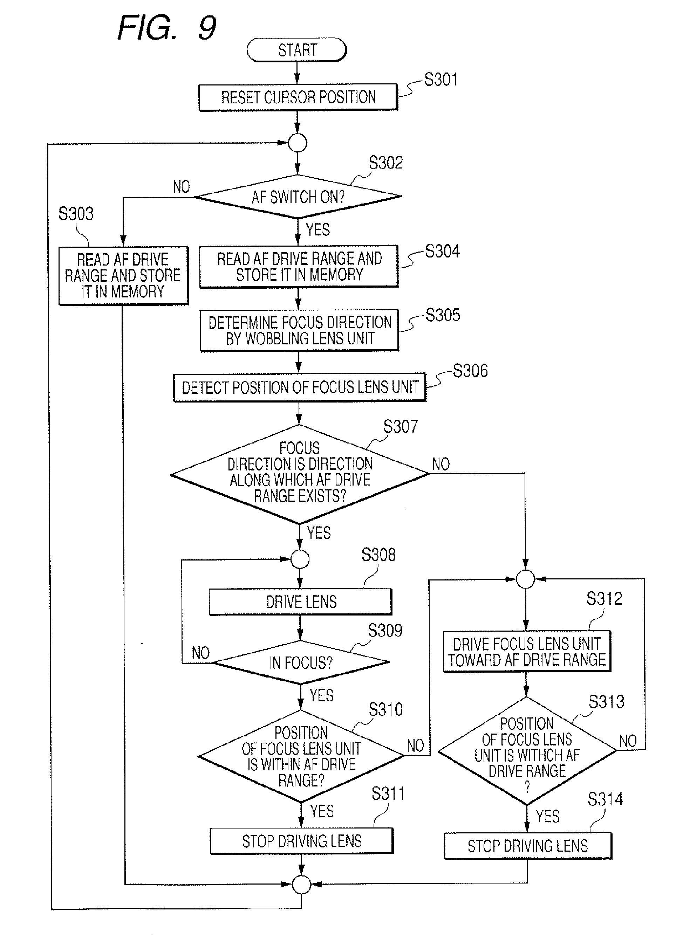

FIG. 9 is a flow chart showing the focusing operation described above. First, turning on the power supply of the lens system resets the cursor position on the display 22 displaying the range of the AF drive range set unit 15 at a step S301. Then, the process advances to a step S302 to check if the AF switch 17 has been turned on.

If the AF switch 17 has been turned off, the process proceeds to a step S303 to read the MAX and the MIN value within the set AF drive range set by using the cross key 21 in the AF drive range set unit 15 and the display 22 and store them in the memory. If the AF switch 17 has been turned on, the AF is in operation. At a step S304, the MAX and the MIN value in the AF drive range are read and stored in the memory as is the case with the step S303.

In a step S305, the lens control unit 8 drives the wobbling lens unit 31 to determine a focus direction, i.e., in which direction a focus position is, from the current position of the focus lens unit. Subsequently, the process advances to a step S306 and the focus position detection means 9 detects the current position of the focus lens unit. In step S307, it is determined whether the focus direction is toward the direction in which the AF drive range set by the AF drive range set unit 15 exists based on the position of the focus lens unit and the determination result of the focus direction. If the drive direction of the focus lens unit is toward the direction at which the AF drive range exists, the process advances to step S308 to drive the focus lens unit.

In step S309, it is confirmed whether or not to focus on the basis of sharpness, if not, the focus lens unit continues to be driven. If yes, the process advances to step S310 to check whether the focus position falls within the AF drive range. If the focus position falls within the AF drive range, the focus lens unit is stopped to be driven in step S311, if it falls outside the range, the process proceeds to step S312.

The process in the step S312 includes also the case where the focus direction is toward the direction in which the AF drive range set by the AF drive range set unit 15 does not exist. In the step S312, the focus lens unit is driven toward the direction of the AF drive range on the basis of the above two decisions: the focus position of the focus lens unit being outside the AF drive range; or the drive direction of the focus lens unit being toward the direction at which the AF drive range does not exist. In step S313, the focus position detection unit 9 detects the position of the focus lens unit. When the focus lens unit falls within the AF drive range, the focus lens unit is stopped to be driven in step S314.

As described above, setting the AF drive range and restricting the drive range of the focus lens unit provide the same effect as in the first embodiment.

(Third embodiment)

While the AF drive range is set within the range of distance to a subject by the AF drive range set unit 15 in the first and the second embodiment, the AF drive range may be set with a focus position as its center after focusing.

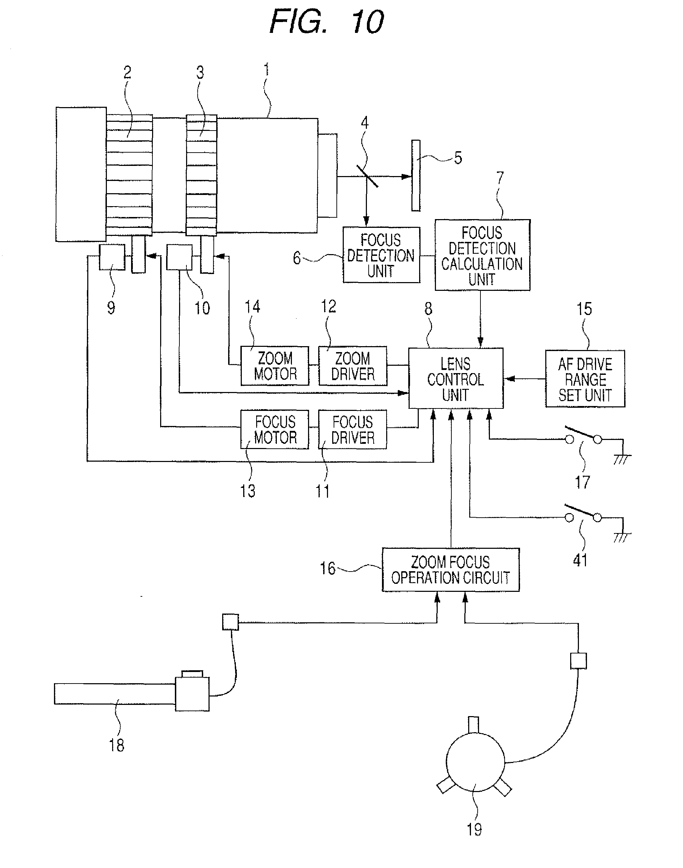

FIG. 10 is a circuit block diagram of a third embodiment. In contrast with FIG. 1 in the first embodiment, the output of an AF restriction switch 41 is connected the lens control unit 8. The AF restriction switch 41 sets whether or not to restrict the AF drive range after focusing.

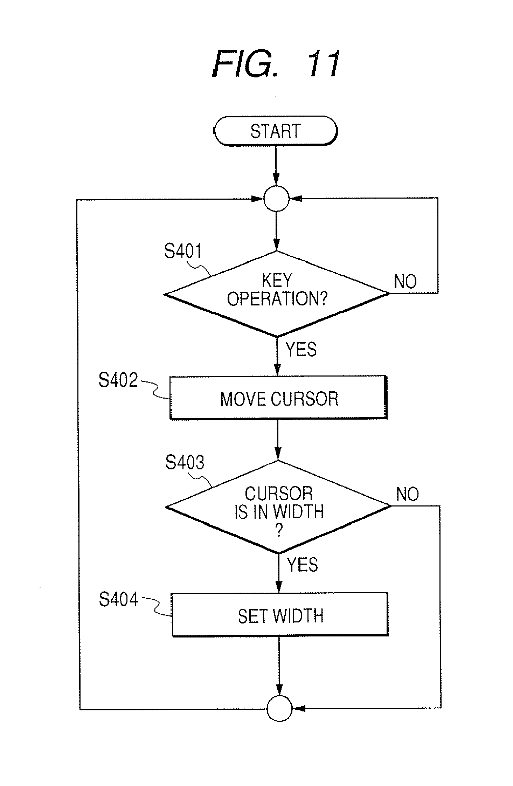

FIG. 11 shows a flow chart for setting operation. In the AF operation, the focus lens unit is driven to a focus position to focus based upon defocus quantity as described above. The range between very near distance and infinity in a lens system is usually taken as a focusable AF drive range. In the third embodiment, however, the width of a range enabling AF drive after focusing is set and restricted by the AF drive range set unit 15 with reference to a focus position.

In the process of the flow chart shown in FIG. 11, the lens control unit 8 always monitors the operation of the cross key 21. It is checked if the key has been operated at step S401. If the key has not been operated, check is repeated. If the key has been operated, the process proceeds to step S402.

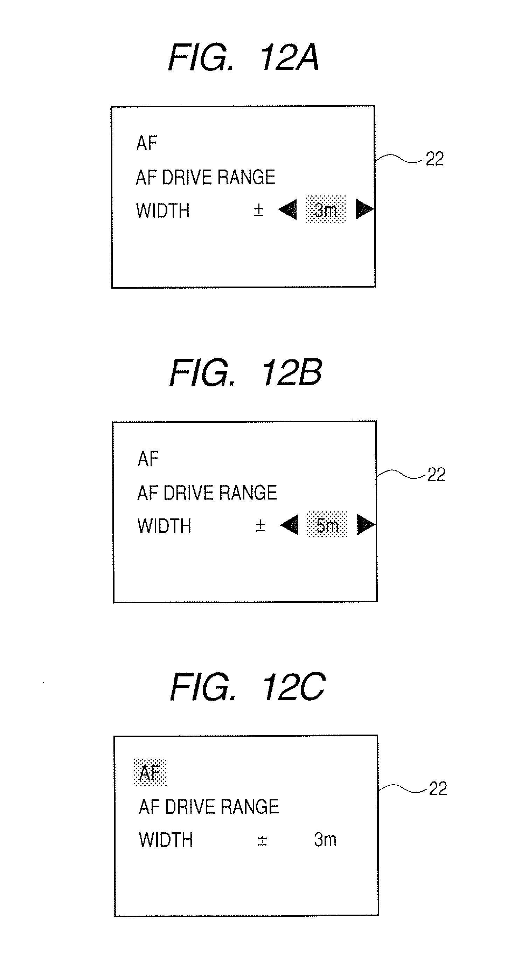

The key operation has been described in the first embodiment. Pressing the arrows (↑ ↓ ← →) of the cross key 21 enables a cursor on the display 22 to be moved to the directions indicated by the arrows. At step S402, the key is operated to move the cursor. After it has been moved, it is confirmed whether the cursor is in the position of WIDTH shown in FIG. 12A. If the cursor is in the position of WIDTH, the process advances to step S403, if not, the process returns to the step S401. At step S404, WIDTH is set.

As shown in FIG. 12A, a value of WIDTH (3 m) can be changed by pressing the arrow "←" or "→" of the cross key 21. In FIG. 12B, pressing the arrow key "→" changes WIDTH to 5 m, which shows a width W of the AF drive range centered about a focus position. After setting has been finished, pressing on the cross key or moving the cursor allows the setting to be stored in the memory, and the process returns to the step S401.

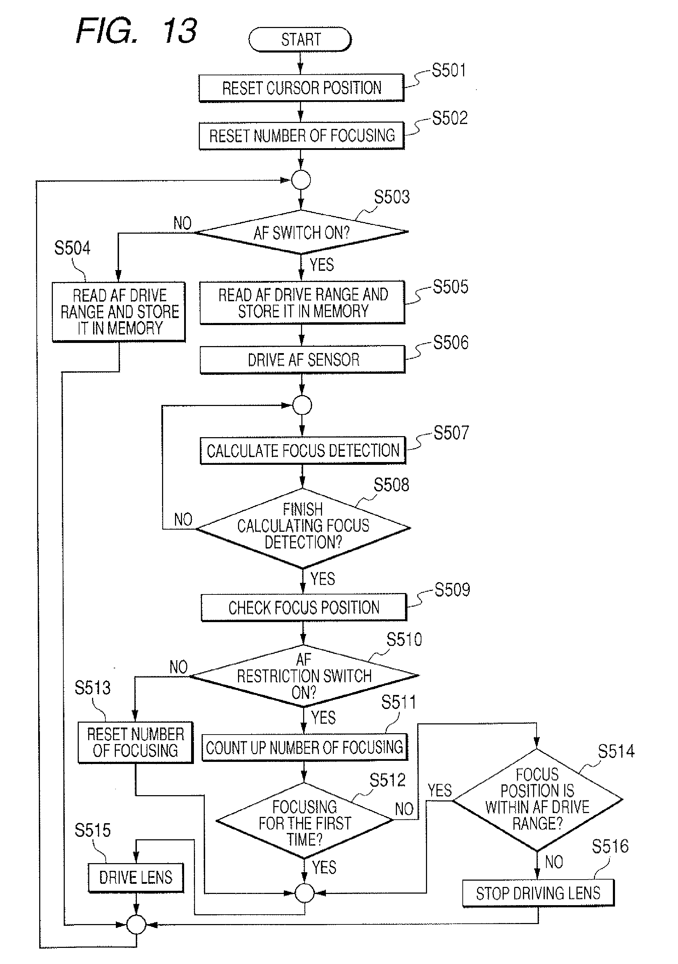

FIG. 13 shows an operational flow chart of the third embodiment. First, turning on the power supply of the lens system causes the process to advances to step S501 to reset the cursor position on the display 22 displaying the range of the AF drive range set unit 15. The cursor may be reset to an arbitrary position, however, it is usual to reset it to position of AF on the top of the display 22 shown in FIG. 12C.

Then, at step S502, the number of focusing is reset and the process proceeds to step S503 to check whether the AF switch 17 has been turned on. If the AF switch 17 has been turned off, the process proceeds to step S504 to read the width W of the AF drive range set by the AF drive range set unit 15 and store it in the memory. If the AF switch 17 has been turned on, AF is in operation. Then, the process advances to step S505 to read the width W (WIDTH) of the set AF drive range and store it in the memory as is the case with the step S504.

Light from a subject is incident on the AF sensor in the focus detection unit 6 through the half mirror 4 in step S506. The line sensor array pairs in the AF sensor store the received light and thereafter send the stored image signal data to the focus detection calculation unit 7 as relative position displacement. In step S507, the focus detection calculation unit 7 starts calculating focus detection. The focus detection calculation unit 7 determines defocus quantity from relative position displacement. Since the relative position displacement has a specific functional relationship with out-of-focus quantity of the shooting lens, the out-of-focus quantity is determined by calculation. Since a relationship between the out-of-focus quantity and defocus quantity being image-plane displacement is determined depending on the optical system to be used, defocus quantity is found from the table data stored in the memory of the control unit 8. The current photographic magnification is obtained on the basis of lens data such as current lens extending amount and focal length with respect to the infinite position of the lens apparatus to be used. The distance to a subject is obtained by calculation on the basis of photographic magnification and defocus quantity. Information obtained on the distance to the subject is send to the lens control unit 8. The process proceeds to step S508. If the calculation of focus detection has not been finished, the process returns to the step S507. If the calculation has been finished, the process proceeds to step S509. The lens control unit 8 confirms the distance to a subject from information on the distance to a subject. In step S510, it is confirmed whether the AF restriction switch 41, which sets the restriction to the AF drive range, has been turned on.

If the AF restriction switch 41 has not been turned on, the width W is not restricted and the number of focusing is reset, enabling AF within the range between a very near distance and infinity. In step S515, the lens control unit 8 generates a drive signal and sends it to the focus driver 11. The focus motor 13 moves the focus lens unit to a position corresponding to a distance to a subject.

If the AF restriction switch 41 has been turned on in the step S510, the process proceeds to step S511 to count up the number of focusing. At step S512, it is checked if this is the first focusing operation or not, i.e., the number of focusing is checked. If so, the process advances to the step S515 to perform a usual AF drive all over the range.

If this is the second or later focus operation, the process proceeds to step S514 to check if a difference between a distance to a subject at the time of the first focus and distance to a subject calculated at the time of the current focus operation falls within the width W of the AF drive range set by the AF drive range set unit 15 and stored in the memory. If the difference falls within the drive range, the process advances to the step S515 to drive AF. If not, the focus lens unit is not driven, kept stationary in step S516.

In a case in which the AF drive range is set to be width W ± 10 m, for example, by the AF drive range set unit 15, if distance to a subject at the first focus position is 20 m and distance to a subject at the second or later focus position is 26 m, they fall within the range of the width W of 20 m ± 10 m. In the case, the focus lens unit is driven to the position of distance to a subject of 26 m. If distance to a subject is 35 m away in a focus position, it exceeds the maximum value of 30 m, so that the lens unit is not driven because the distance is outside the drive range.

Thus, the subsequent AF drive range is set on the basis of the focus position at the first AF operation and the focus lens unit is driven only if a subject is within the range, which provides the same effect as in the foregoing embodiments.

(Fourth embodiment)

In the third embodiment is described the AF method such as phase difference method in which a focus lens unit is driven to find distance to a subject without reaching a focus position. However, AF can be performed, like a contrast method, by using a video signal to drive a wobbling lens unit to detect a focus direction and by using high frequency components extracted from the video signal.

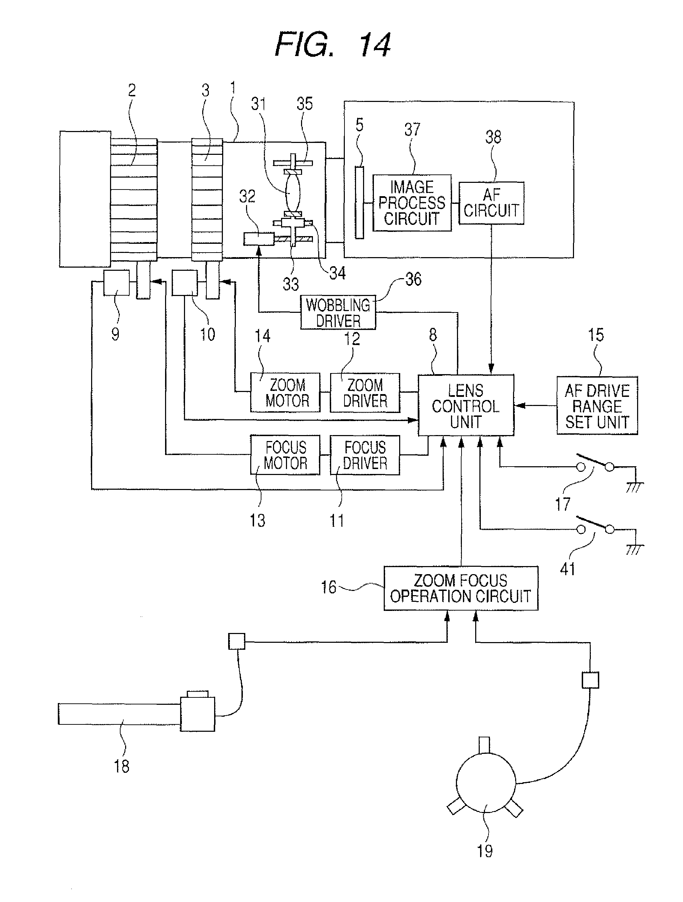

FIG. 14 shows a circuit block diagram of a fourth embodiment. In contrast with FIG. 8 in the second embodiment, the output of the AF restriction switch 41 is connected to the lens control unit 8.

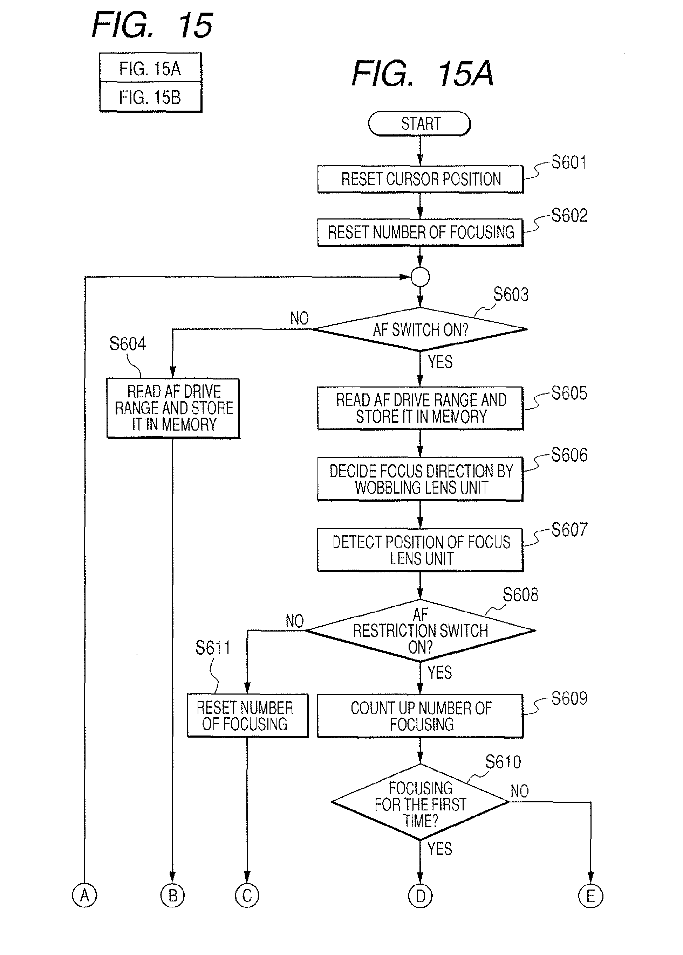

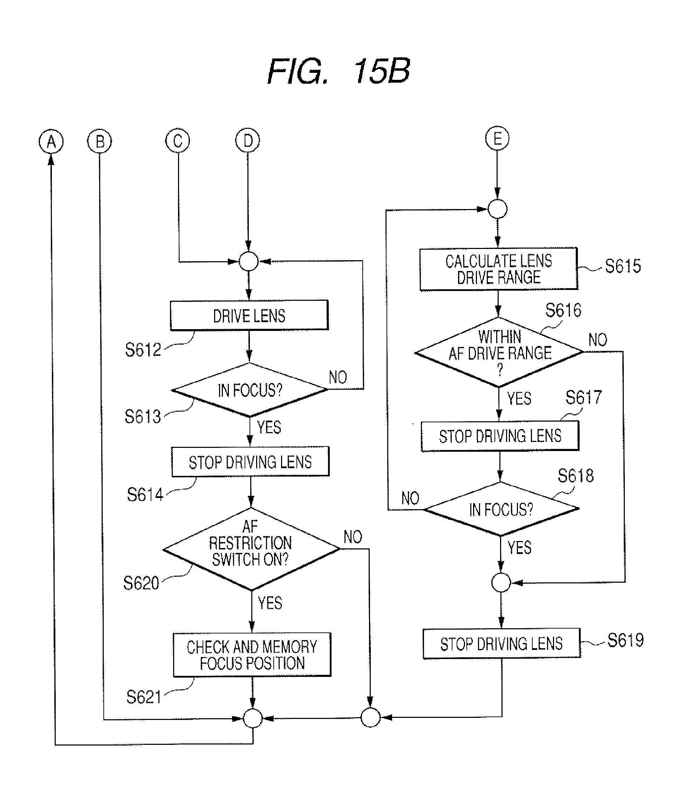

FIGS. 15A and 15B show operational flow charts of the fourth embodiment. First, turning on the power supply of the lens system causes the process to advance to step S601 to reset the cursor position on the display 22 displaying the range of the AF drive range set unit 15. And then, in step S602, the number of focusing is reset and the process proceeds to step S603 to confirm whether the AF switch 17 has been turned on.

If the AF switch 17 has been turned off, the process advances to step S604 to read the width W of the AF drive range set by the AF drive range set unit 15 as described in the third embodiment and to store it in the memory. If the AF switch 17 has been turned on, AF is in operation. The process advances to step S605 to read the set width W and store it in the memory as is the case with the step S604.

The process proceeds to step S606 and the lens control unit 8 determines a focus direction, i.e., in which direction the current focus position of the focus lens unit is. Subsequently, the process advances to step S607 and the focus position detection means 9 detects the current position of the focus lens unit.

The process advances to step S608 to check if the AF restriction switch 41 has been turned on. If the AF restriction switch 41 has not been turned on, the width W of the AF drive range is not restricted and the number of focusing is reset at step S611, enabling AF within the range between very near distance and infinity. Then, the process proceeds to a step S612.

If the AF restriction switch 41 has been turned on, the process proceeds to step S609 to count up the number of focusing. In step S610, it is checked if this is the first focus operation. If so, the process advances to step S612.
If this is the second or later focus operation, the process proceeds to step S615. The lens control unit 8 generates a driving signal to send it to the focus driver 11 to drive the focus lens unit, thereby confirming whether the focus lens unit is in focus on the basis of sharpness at step S613. If not, the focus lens unit continues to be driven. If it is in focus, the process proceeds to step S614 to stop the focus lens unit to be driven.

Further, the process proceeds to step S620 to confirm whether the AF restriction switch 41 has been turned on. If not, the process returns to the step S603. If so, a focus position is checked and stored in step S621, thereafter, the process returns to the step S603. If the current focus operation is determined as the second or later one in the step S610, the drive range of the focus lens unit is calculated from the width W set by the AF drive range set unit 15 and stored in the memory and the distance to a subject at the time of the first focus operation in the step S615.

The process advances to step S616 to check if the current position of the focus lens unit falls within the calculated AF drive range. If so, the process proceeds to step S617 to generate a drive signal to drive the focus lens unit so that the focus lens unit is moved to the focus direction determined by the lens control unit 8. It is checked whether the focus lens unit is in focus in step S618. If not, the process returns to the step S615. If so, the process advances to step S619 to stop the lens to be driven.

Incidentally, if the current position of the focus lens unit falls outside the calculated AF drive range at the step S616, the AF drive is stopped, and the process proceeds to the step S619 to stop the lens to be driven.

As described above, when the focus lens unit is moved to focus direction during AF operation, the movement is restricted within the width W of the lens drive range on the basis of the first focus position so that the focus lens unit is not moved outside the predetermined range. On the basis of the focus position in the first AF operation, a subsequent AF drive range is set to take it as the AF drive range, and restricting the drive range of the focus lens unit provides the same effect as in the above embodiment.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2005-264621, filed September 13, 2006, which is hereby incorporated by reference herein in its entirety.
A lens apparatus comprising an image pickup optical system having a focus lens, a focus state detection unit which detects focus state of the image pickup optical system, a distance detection unit which determines the distance to the subject, an actuator which drives the focus lens, a controller which controls the operation of the actuator according to the output from the focus state detection unit and a distance range setting unit which sets a distance range in focus operation for the focus lens, wherein the controller compares distance information from the distance detection unit and distance range set by the distance range setting unit to control the operation of the actuator which drives the focus lens based on the comparison results.

## Claims

1. A lens apparatus comprising:
an image pickup optical system having a focus lens, the image pickup optical system which picks up a subject image;
a focus state detection unit which detects a focus state of the image pickup optical system;
a distance detection unit which determines distance to the subject on the basis of the output from the focus state detection unit and optical information from the image pickup optical system;
an actuator which drives the focus lens;
a controller which controls an operation of the actuator according to the output from the focus state detection unit; and
a distance range setting unit which sets a distance range in focus operation for the focus lens,
wherein the controller compares distance information from the distance detection unit and the distance range set by the distance range setting unit to control the operation of the actuator which drives the focus lens based on the comparison results.

2. The lens apparatus according to claim 1, wherein the controller compares the distance information from the distance detection unit and the distance range set by the distance range setting unit, operates the actuator according to the output from the focus state detection unit to drive the focus lens if the distance information from the distance detection unit falls within the distance range set by the distance range setting unit, but does not operate the actuator if the distance information from the distance detection unit falls outside the distance range set by the distance range setting unit.

3. The lens apparatus according to claim 1, wherein the distance range in focus operation set by the distance range setting unit is set by a first given distance and a second given distance different from the first distance where both of the first and second distances are within a focusable distance range of the focus lens.

4. The lens apparatus according to claim 1, wherein the focusable distance range set by the distance range setting unit is set by a first distance shorter than a distance to the subject and a second distance longer than the distance to the subject, with the distance to the subject determined by the distance detection unit being a reference.
